# EUROPÄISCHE PATENTSCHRIFT

(11) **EP 4 231 069 B1**
(45) Veröffentlichungstag und Bekanntmachung des Hinweises auf die Patenterteilung: **24.12.2025**
(21) Anmeldenummer: 22157972.5
(22) Anmeldetag: 22.02.2022
(51) Int. Cl.: G02B 6/26

(54) **OPTISCHE DÄMPFUNGSEINRICHTUNG**
OPTICAL DAMPING DEVICE
DISPOSITIF OPTIQUE D'AMORTISSEMENT

(43) Veröffentlichungstag der Anmeldung: 23.08.2023
(73) Patentinhaber: Siemens Energy Global GmbH & Co. KG, 81739 München (DE)
(72) Erfinder: Stahlhut, Nils, 91341 Röttenbach (DE)

(56) Entgegenhaltungen:
- WO-A1-2016/138951
- DE-A1- 3 027 590
- US-A- 4 583 860

## Beschreibung

Die Erfindung betrifft eine optische Dämpfungseinrichtung und ein Verfahren zum Dämpfen von optischer Strahlung. Diese optische Dämpfungseinrichtung und das Verfahren sind geeignet zur Dämpfung von optischer Strahlung, insbesondere zur Dämpfung von Laserstrahlung.

Eine optische Dämpfungseinrichtung kann eingesetzt werden, um die Amplitude oder den Pegel einer optischen Strahlung, insbesondere eines optischen Signals, zu verringern. Dabei ist es denkbar, als optische Dämpfungseinrichtung einen Lichtwellenleiter mit einer vorbestimmten Länge einzusetzen, wobei die längenabhängige Dämpfung des Lichtwellenleiters bekannt ist. Solche Lichtwellenleiter müssen jedoch oftmals speziell angefertigt werden und sind daher teuer. Eine Strahlenfalle für einen Laserstrahl mit einem Reflektor und einer Absorbereinrichtung ist aus dem Stand der Technik bekannt (WO2016138951).

Der Erfindung liegt die Aufgabe zugrunde, eine optische Dämpfungseinrichtung und ein Verfahren zum Dämpfen von optischer Strahlung anzugeben, die einfach und kostengünstig realisiert werden können.

Diese Aufgabe wird erfindungsgemäß gelöst durch eine Dämpfungseinrichtung und durch ein Verfahren nach den unabhängigen Patentansprüchen. Vorteilhafte Ausgestaltungen der Dämpfungseinrichtung sind in den abhängigen Patentansprüchen angegeben.

Offenbart wird eine Dämpfungseinrichtung zum Dämpfen optischer Strahlung mit einem Körper aus einem für die Strahlung (im Wesentlichen) undurchlässigen Material, wobei der Körper eine Ausnehmung mit der Form eines Kreiszylinders, eine erste Öffnung und eine zweite Öffnung aufweist, wobei die erste Öffnung und die zweite Öffnung jeweils einen Zugang zu der Ausnehmung bilden. Diese Dämpfungseinrichtung ist sehr einfach aufgebaut und kann einfach und kostengünstig hergestellt werden. Insbesondere kann die Ausnehmung mit der Form des Kreiszylinders einfach hergestellt werden, zum Beispiel durch Fräsen.

Die Dämpfungseinrichtung weist also eine kreiszylinderförmige Ausnehmung auf. Die erste Öffnung und die zweite Öffnung durchgreifen jeweils den Körper und münden in die Ausnehmung. Die Ausnehmung bildet einen Hohlraum in dem Körper. Insbesondere kann die Ausnehmung einen in sich geschlossenen Hohlraum in dem Körper bilden, der nur durch die erste Öffnung und die zweite Öffnung mit dem den Körper umgebenden Außenraum verbunden ist.

Die Dämpfungseinrichtung kann so ausgestaltet sein, dass
- die erste Öffnung und die zweite Öffnung jeweils als eine bohrungsartige Öffnung (insbesondere eine Bohrung) ausgebildet sind. Die bohrungsartigen Öffnungen in dem Körper sind einfach herstellbar.

Die Dämpfungseinrichtung ist so ausgestaltet, dass
- die erste Öffnung und die zweite Öffnung in einer Ebene liegen, wobei die Ebene senkrecht (orthogonal) zu der Längsachse der (kreiszylinderförmigen) Ausnehmung angeordnet ist. Dadurch kann die Dämpfungseinrichtung sehr kompakt realisiert werden.

Die Dämpfungseinrichtung ist erfindungsgemäß so ausgestaltet, dass
- die erste Öffnung und die zweite Öffnung rechtwinklig zueinander in der Ebene liegen. Es sind gemäß eines Ausführungsbeispiels, welches nicht unter den Anspruchswortlaut fällt, aber auch andere Winkelbeziehungen zwischen der ersten Öffnung und der zweiten Öffnung möglich.

Die Dämpfungseinrichtung kann so ausgestaltet sein, dass
- die Ausnehmung allseitig von dem Körper umschlossen ist.

Die Dämpfungseinrichtung kann so ausgestaltet sein, dass
- die Ausnehmung (ausschließlich) durch die erste Öffnung und die zweite Öffnung für optische Strahlung zugänglich ist.

Die Dämpfungseinrichtung kann so ausgestaltet sein, dass
- die erste Öffnung eine Eintrittsöffnung für optische Strahlung und die zweite Öffnung eine Austrittsöffnung für optische Strahlung ist.

Die Dämpfungseinrichtung kann so ausgestaltet sein, dass
- der Körper einen dosenartigen Teil (Dose) und einen Deckel aufweist, wobei der Deckel den dosenartigen Teil verschließt.

Die Dämpfungseinrichtung kann so ausgestaltet sein, dass
- der Deckel lösbar mit dem dosenartigen Teil verbunden ist. Eine lösbare Verbindung ist deshalb vorteilhaft, weil dadurch bei Bedarf der Deckel einfach geöffnet werden kann (beispielsweise zum Reinigen der Ausnehmung). Der Deckel kann insbesondere mit dem dosenartigen Teil verschraubt sein. Alternativ kann der Deckel aber auch nichtlösbar mit dem dosenartigen Teil verbunden sein; der Deckel kann beispielsweise mit dem dosenartigen Teil verschweißt oder verklebt sein.

Die Dämpfungseinrichtung kann so ausgestaltet sein, dass
- die erste Öffnung und die zweite Öffnung in dem dosenartigen Teil angeordnet sind.

Die Dämpfungseinrichtung kann so ausgestaltet sein, dass
- die (kreiszylinderförmige) Ausnehmung von einer Grundfläche, einer Mantelfläche und einer Deckfläche (des Körpers) begrenzt ist.

Die Dämpfungseinrichtung kann insbesondere so ausgestaltet sein, dass
- die Grundfläche und die Mantelfläche dem dosenartigen Teil zugehörig sind und die Deckfläche dem Deckel zugehörig ist.

Die Dämpfungseinrichtung kann so ausgestaltet sein, dass
- die Mantelfläche reflektierend beschichtet oder eloxiert ist. Der Körper kann insbesondere aus Aluminium bestehen, dann kann die Mantelfläche eloxiert sein. Durch die Eloxierung wird die Langzeitstabilität der Dämpfungseinrichtung verbessert, weil durch die Eloxierung eine unkontrollierte Korrosion der Mantelfläche vermieden oder zumindest reduziert wird. Wenn der Körper aus einem anderen Material besteht (beispielsweise aus einem anderen Metall oder aus einem Kunststoff), dann kann die Mantelfläche insbesondere reflektierend beschichtet sein. Durch die Beschichtung werden die Reflexionseigenschaften verbessert.

Die Dämpfungseinrichtung kann so ausgestaltet sein, dass
- die optische Dämpfung der Dämpfungseinrichtung (im Wesentlichen) dem Verhältnis aus der freien Querschnittsfläche der zweiten Öffnung (also der Austrittsöffnung) und der Mantelfläche entspricht. Durch die Wahl dieses Verhältnisses kann also die Dämpfung in einem weiten Bereich gewählt werden.

Die Dämpfungseinrichtung kann auch mehr als zwei Öffnungen aufweisen, zum Beispiel drei Öffnungen. Dann kann die Dämpfungseinrichtung gleichzeitig als ein optischer Verzweiger arbeiten. Die zweite Öffnung ist dann eine erste Austrittsöffnung und die dritte Öffnung ist eine zweite Austrittsöffnung.

Offenbart wird weiterhin ein Verfahren zum Dämpfen von optischer Strahlung mittels einer Dämpfungseinrichtung mit einem Körper aus einem für die Strahlung (im Wesentlichen) undurchlässigen Material, wobei der Körper eine Ausnehmung mit der Form eines Kreiszylinders, eine erste Öffnung und eine zweite Öffnung aufweist, wobei die erste Öffnung und die zweite Öffnung jeweils einen Zugang zu der Ausnehmung bilden, wobei bei dem Verfahren
- optische Strahlung durch die erste Öffnung (als eingehende Strahlung) in die Ausnehmung eingeleitet wird,
- die Strahlung an einer die Ausnehmung begrenzenden Fläche (hier: insbesondere an der Mantelfläche der Ausnehmung) vielfach reflektiert wird, und
- nur derjenige Anteil der (eingehenden) Strahlung, der auf die zweite Öffnung reflektiert wird, als ausgehende Strahlung aus dem Körper ausgeleitet wird.

Das Verfahren kann so ablaufen, dass
- die erste Öffnung und die zweite Öffnung in einer Ebene liegen, wobei die Ebene senkrecht (orthogonal) zu der Längsachse der (kreiszylinderförmigen) Ausnehmung angeordnet ist.

Die Dämpfungseinrichtung und das Verfahren weisen gleiche oder gleichartige Vorteile auf und können insbesondere gleich oder gleichartig ausgestaltet sein.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel einer Dämpfungseinrichtung in einer Ansicht von vorn, in
- Figur 2: die Dämpfungseinrichtung in einer Ansicht von der Seite im Schnitt, in
- Figur 3: die Dämpfungseinrichtung mit einem beispielhaften Strahlenverlauf, und in
- Figur 4: eine dreidimensionale Schnittdarstellung der Dämpfungseinrichtung
dargestellt.

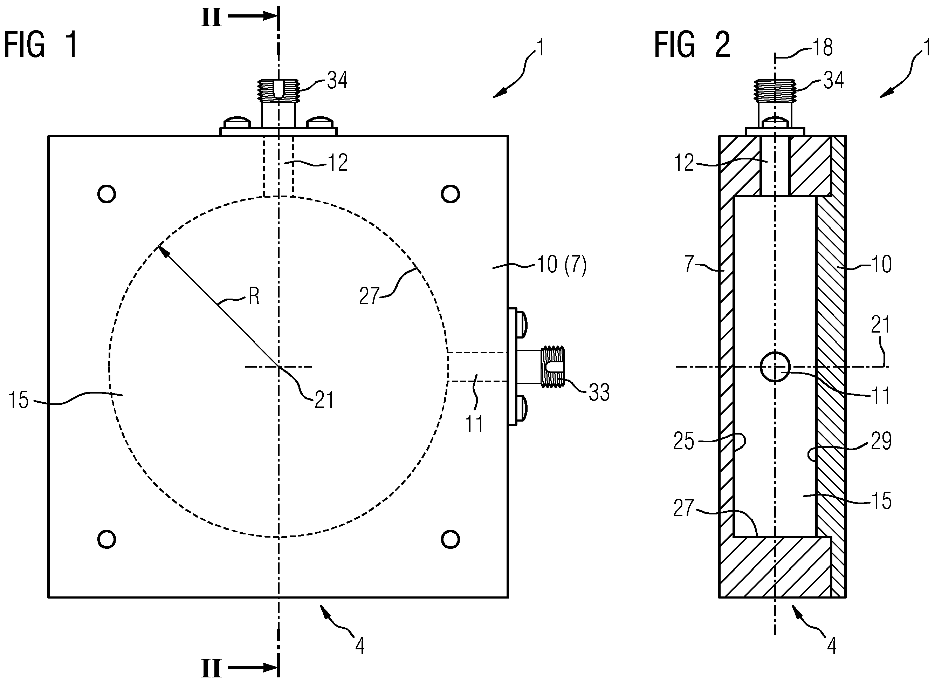

In den Figuren 1 und 2 ist eine Dämpfungseinrichtung 1 dargestellt, die auch als eine Dämpfungsvorrichtung oder als ein Dämpfungsglied bezeichnet werden kann. Dabei zeigt die Figur 1 die Dämpfungseinrichtung 1 in einer Ansicht von vorn und die Figur 2 die Dämpfungseinrichtung 1 in einer Seitenansicht in einer Schnittdarstellung.

Ein Körper 4 der Dämpfungseinrichtung 1 besteht aus einem für die verwendete optische Strahlung optisch undurchlässigen Material. Dieser Körper 4 weist einen dosenartigen Teil 7 und einen Deckel 10 auf. Der Deckel 10 verschließt dabei den dosenartigen Teil 7. Im Ausführungsbeispiel ist der Deckel 10 lösbar mit dem dosenartigen Teil 7 verbunden: der Deckel 10 ist mittels vier nicht dargestellter Schrauben mit dem dosenartigen Teil 7 verschraubt. In anderen Ausführungsbeispielen kann der Deckel 10 aber auch nichtlösbar mit dem dosenartigen Teil 7 verbunden sein, der Deckel 10 kann beispielsweise mit dem dosenartigen Teil 7 verklebt oder verschweißt sein.

Der Körper 4, genauer gesagt der dosenartige Teil 7, weist eine erste Öffnung 11 und eine zweite Öffnung 12 auf. Weiterhin weist der Körper 4 eine Ausnehmung 15 auf, wobei die Ausnehmung 15 die Form eines Kreiszylinders hat (kreiszylinderförmige Ausnehmung 15). Die Ausnehmung 15 weist einen Radius R auf. Bei der kreiszylinderförmigen Ausnehmung 15 ist insbesondere die Höhe kleiner als der Durchmesser, es handelt sich also um eine flache Ausnehmung. Dadurch kann die Dämpfungseinrichtung besonders kompakt aufgebaut werden.

Die Dämpfungseinrichtung 1 ist also scheibenförmig ausgestaltet. Die Ausnehmung 15 ist dabei allseitig von dem Körper 4 umschlossen. Der die Ausnehmung 15 umgebende Körper 4 kann beispielsweise aus einem Metall oder aus einem Kunststoff bestehen. Im Ausführungsbeispiel besteht der Körper 4 aus Aluminium. Die Ausnehmung 15 ist ausschließlich durch die erste Öffnung 11 und durch die zweite Öffnung 12 für optische Strahlung zugänglich.

Die erste Öffnung 11 und die zweite Öffnung 12 sind in dem dosenartigen Teil 7 angeordnet und jeweils als eine bohrungsartige Öffnung (Bohrung) ausgebildet. Die erste Öffnung 11 ist eine Eintrittsöffnung für optische Strahlung, die zweite Öffnung 12 ist eine Austrittsöffnung für optische Strahlung. Die erste Öffnung 11 und die zweite Öffnung 12 liegen in einer Ebene 18. Diese Ebene 18 ist senkrecht zu einer Längsachse 21 der kreiszylinderförmigen Ausnehmung 15 angeordnet. Die Längsachse 18 entspricht dabei der Rotationsachse der Ausnehmung 15. Dabei liegen die erste Öffnung 11 und die zweite Öffnung 12 erfindungsgemäß rechtwinklig zueinander in der Ebene 18. In anderen Ausführungsbeispielen, welche nicht unter den Anspruchswortlaut fallen, können die erste Öffnung 11 und die zweite Öffnung 12 aber auch in einem anderen Winkel zueinander in der Ebene 18 liegen.

Die kreiszylinderförmige Ausnehmung 15 ist von einer Grundfläche 25, einer Mantelfläche 27 und einer Deckfläche 29 des Körpers 4 begrenzt. Dabei ist die Grundfläche 25 und die Mantelfläche 27 dem dosenartigen Teil 7 zugehörig und die Deckfläche 29 ist dem Deckel 10 zugehörig. Die Grundfläche 25 und die Mantelfläche 27 werden also von dem dosenartigen Teil 7 gebildet und die Deckfläche 29 wird von dem Deckel 10 gebildet.

Die Mantelfläche 27 des aus Aluminium bestehenden Körpers 4 ist im Ausführungsbeispiel eloxiert. Diese eloxierte Mantelfläche ist vorteilhafterweise korrosionsfest und langzeitstabil. In anderen Ausführungsbeispielen (insbesondere dann, wenn der Körper 4 aus einem anderen Material als aus Aluminium besteht) kann die Mantelfläche aber auch reflektierend beschichtet sein. Wenn der Körper 4 beispielsweise aus einem Kunststoff besteht, dann kann die Mantelfläche 27 zum Beispiel mit einem Metall reflektierend beschichtet sein.

An dem von der Ausnehmung 15 abgewandten Ende der ersten Öffnung 11 ist ein erster optischer Steckverbinder 33 angeordnet. Der erste optische Steckverbinder 33 dient zum Anschluss eines ersten optischen Leitmediums (zum Beispiel eines ersten Lichtwellenleiters) an die Dämpfungseinrichtung 1. Weiterhin ist an dem von der Ausnehmung 15 abgewandten Ende der zweiten Öffnung 12 ein zweiter optischer Steckverbinder 34 angeordnet, welcher zum Anschluss eines zweiten optischen Leitmediums (zum Beispiel eines zweiten Lichtwellenleiters) an die Dämpfungseinrichtung 1 dient. Im Ausführungsbeispiel sind der erste optische Steckverbinder 33 und der zweite optische Steckverbinder 34 an den Körper 4, genauer gesagt an dem dosenartigen Teil 7 des Körpers 4, befestigt, insbesondere angeschraubt.

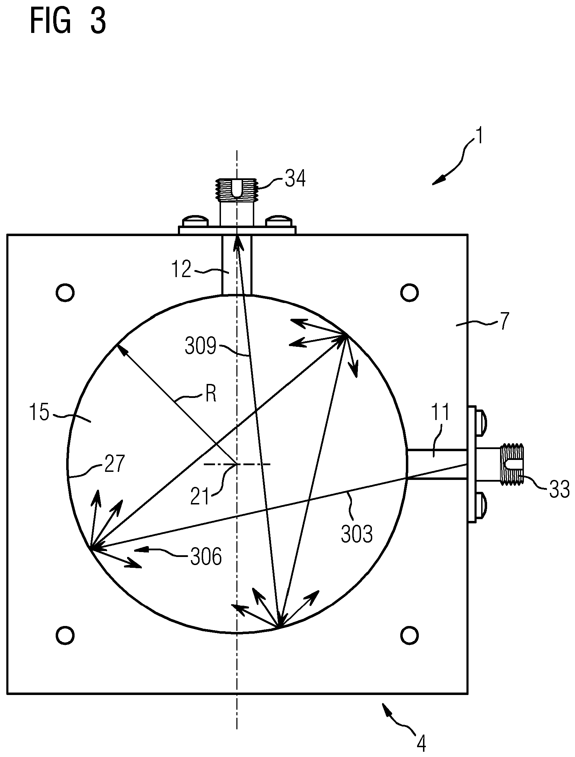

In Figur 3 ist das Verfahren zum Dämpfen von optischer Strahlung mittels der Dämpfungseinrichtung 1 modellhaft dargestellt. Eingehende optische Strahlung 303 (hier modellhaft symbolisiert als ein eingehender Strahl 303) wird durch die erste Öffnung 11 in die Ausnehmung 15 eingeleitet. An der die Ausnehmung 15 begrenzenden Fläche (insbesondere an der Mantelfläche 27 der Ausnehmung 15) wird die optische Strahlung vielfach reflektiert. Im Ausführungsbeispiel der Figur 3 sind lediglich symbolisch 3 Reflexionsstellen 306 dargestellt. In der Praxis treten viel mehr Reflexionen auf, so dass die eingehende Strahlung 303 nahezu gleichmäßig über die gesamte Mantelfläche 27 verteilt wird.

Nur derjenige Anteil der eingehenden Strahlung 303, der auf die zweite Öffnung 12 reflektiert wird, wird als ausgehende optische Strahlung 309 aus dem Körper 4 und damit aus der Dämpfungseinrichtung 1 ausgeleitet. Die Strahlung, die nicht als ausgehende Strahlung 309 aus der Dämpfungseinrichtung 1 ausgeleitet wird, wird im Körper 4 in Wärme umgewandelt und an die Umgebung abgegeben.

Die optische Dämpfung der Dämpfungseinrichtung 1 entspricht im Wesentlichen dem Verhältnis aus der freien Querschnittsfläche der zweiten Öffnung 12 und der Fläche der Mantelfläche 27. Wenn also beispielsweise die freie Querschnittsfläche der zweiten Öffnung 25 mm² beträgt und die Fläche der Mantelfläche 12500 mm² beträgt, dann beträgt die optische Dämpfung der Dämpfungseinrichtung 25:12500 = 1:500 = 0,002.

Insbesondere kann zusätzlich eine optische Einkoppeldämpfung auftreten, wenn das zweite optische Leitmedium (zum Beispiel der zweite Lichtwellenleiter) an die zweite Öffnung angeschlossen wird. Wenn die ausgehende optische Strahlung 309 in das zweite Leitmedium eingekoppelt wird, dann kann die Einkoppeldämpfung auftreten, die zu der Dämpfung der Dämpfungseinrichtung hinzukommt.

Die beispielhaft beschriebene Dämpfungseinrichtung 1 weist lediglich die erste Öffnung und die zweite Öffnung auf. In anderen Ausführungsbeispielen kann die Dämpfungseinrichtung aber auch mehr als zwei Öffnungen aufweisen, zum Beispiel kann die Dämpfungseinrichtung zusätzlich eine dritte Öffnung aufweisen. Die zweite Öffnung ist dann eine erste Austrittsöffnung und die dritte Öffnung ist dann eine zweite Austrittsöffnung. Die Dämpfungseinrichtung kann dann insbesondere zusätzlich als ein optischer Verzweiger arbeiten. Die Dämpfungseinrichtung kann also im Allgemeinen eine Eintrittsöffnung für optische Strahlung und eine oder mehrere Austrittsöffnungen für optische Strahlung aufweisen. Die Öffnungen können in der Ebene 18 entlang des Umfangs der kreiszylinderförmigen Ausnehmung 15 verteilt angeordnet sein. Beim Ausführungsbeispiel der Figur 3 kann die dritte Öffnung insbesondere der zweiten Öffnung 12 gegenüberliegen, also um 180 Grad gegenüber der zweiten Öffnung 12 versetzt angeordnet sein. Die erste Öffnung liegt dann rechtwinklig zu der zweiten Öffnung 12 und rechtwinklig zu der dritten Öffnung in der Ebene 18.

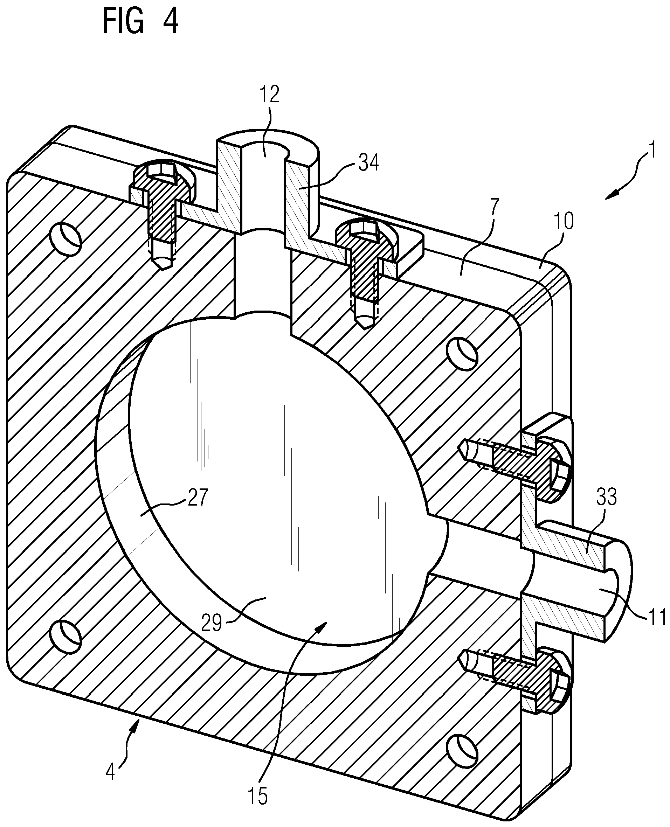

Figur 4 zeigt die Dämpfungseinrichtung 1 in einer dreidimensionalen Schnittdarstellung. Dabei kann man gut die erste Öffnung 11 und die zweite Öffnung 12 erkennen, die die Eintrittsöffnung bzw. die Austrittsöffnung für die optische Strahlung bilden.

Es wurde eine Dämpfungseinrichtung beschrieben, die Vielfach-Reflexionen innerhalb einer Ausnehmung, insbesondere innerhalb einer geschlossenen Geometrie nutzt, um einen Dämpfungseffekt für optische Strahlung zu erreichen. Die Ausnehmung kann insbesondere die Form eines (flachen) Kreiszylinders aufweisen. Als Körper kann ein Aluminiumblock verwendet werden, in den die Ausnehmung (beispielsweise durch Fräsen) eingebracht ist. Die eingestrahlte Lichtleistung verteilt sich durch die Vielfach-Reflexionen auf den Umfang der Ausnehmung. Die Dämpfungseinrichtung kann einfach und kostengünstig hergestellt werden und weist einen kompakten/platzsparenden Aufbau auf.

### Bezugszeichen

- 1: optische Dämpfungseinrichtung
- 4: Körper
- 7: dosenartiger Teil
- 10: Deckel
- 11: erste Öffnung
- 12: zweite Öffnung
- 15: Ausnehmung
- 18: Ebene
- 21: Längsachse, Rotationsachse
- 25: Grundfläche
- 27: Mantelfläche
- 29: Deckfläche
- 33: erster optischer Steckverbinder
- 34: zweiter optischer Steckverbinder

- 303: eingehende Strahlung
- 306: Reflexionsstelle
- 309: ausgehende Strahlung

## Patentansprüche

1. Dämpfungseinrichtung (1) zum Dämpfen optischer Strahlung mit einem Körper (4) aus einem für die Strahlung im Wesentlichen undurchlässigen Material, wobei der Körper (4) eine Ausnehmung (15) mit der Form eines Kreiszylinders, eine erste Öffnung (11) und eine zweite Öffnung (12) aufweist, wobei die erste Öffnung (11) und die zweite Öffnung (12) jeweils einen Zugang zu der Ausnehmung (15) bilden, **dadurch gekennzeichnet, dass**
- die erste Öffnung (11) und die zweite Öffnung (12) in einer Ebene (18) liegen, wobei die Ebene (18) senkrecht zu der Längsachse (21) der Ausnehmung (15) angeordnet ist, und
- die erste Öffnung (11) und die zweite Öffnung (12) rechtwinklig zueinander in der Ebene (18) liegen.

2. Dämpfungseinrichtung nach Anspruch 1,
**dadurch gekennzeichnet, dass**
- die erste Öffnung (11) und die zweite Öffnung (12) jeweils als eine bohrungsartige Öffnung ausgebildet sind.

3. Dämpfungseinrichtung nach einem der vorhergehenden Ansprüche,
**dadurch gekennzeichnet, dass**
- die Ausnehmung (15) allseitig von dem Körper (4) umschlossen ist.

4. Dämpfungseinrichtung nach einem der vorhergehenden Ansprüche,
**dadurch gekennzeichnet, dass**
- die Ausnehmung (15) durch die erste Öffnung (11) und die zweite Öffnung (12) für optische Strahlung zugänglich ist.

5. Dämpfungseinrichtung nach einem der vorhergehenden Ansprüche,
**dadurch gekennzeichnet, dass**
- die erste Öffnung (11) eine Eintrittsöffnung für optische Strahlung und die zweite Öffnung (12) eine Austrittsöffnung für optische Strahlung ist.

6. Dämpfungseinrichtung nach einem der vorhergehenden Ansprüche,
**dadurch gekennzeichnet, dass**
- der Körper (4) einen dosenartigen Teil (7) und einen Deckel (10) aufweist, wobei der Deckel (10) den dosenartigen Teil (7) verschließt.

7. Dämpfungseinrichtung nach Anspruch 6,
**dadurch gekennzeichnet, dass**
- der Deckel (10) lösbar mit dem dosenartigen Teil (7) verbunden ist.

8. Dämpfungseinrichtung nach Anspruch 6 oder 7,
**dadurch gekennzeichnet, dass**
- die erste Öffnung (11) und die zweite Öffnung (12) in dem dosenartigen Teil (7) angeordnet sind.

9. Dämpfungseinrichtung nach einem der vorhergehenden Ansprüche,
**dadurch gekennzeichnet, dass**
- die Ausnehmung (15) von einer Grundfläche (25), einer Mantelfläche (27) und einer Deckfläche (29) begrenzt ist.

10. Dämpfungseinrichtung nach Anspruch 9 und Anspruch 6,
**dadurch gekennzeichnet, dass**
- die Grundfläche (25) und die Mantelfläche (27) dem dosenartigen Teil (7) zugehörig sind und die Deckfläche (29) dem Deckel (10) zugehörig ist.

11. Dämpfungseinrichtung nach Anspruch 9 oder 10,
**dadurch gekennzeichnet, dass**
- die Mantelfläche (27) reflektierend beschichtet oder eloxiert ist.

12. Dämpfungseinrichtung nach einem der Ansprüche 9 bis 11, **dadurch gekennzeichnet, dass**
- die optische Dämpfung der Dämpfungseinrichtung (1) im Wesentlichen dem Verhältnis aus der freien Querschnittsfläche der zweiten Öffnung (12) und der Mantelfläche (27) entspricht.

13. Verfahren zum Dämpfen von optischer Strahlung mittels einer Dämpfungseinrichtung (1) nach Anspruch 1, wobei bei dem Verfahren
- optische Strahlung (303) durch die erste Öffnung (11) in die Ausnehmung (15) eingeleitet wird,
- die Strahlung an einer die Ausnehmung (15) begrenzenden Fläche (27) vielfach reflektiert (306) wird, und
- nur derjenige Anteil der Strahlung, der auf die zweite Öffnung (12) reflektiert wird, als ausgehende Strahlung (309) aus dem Körper (4) ausgeleitet wird.

## Claims

1. A damping device (1) for damping optical radiation, comprising a body (4) made of a material which is substantially impermeable to the radiation, wherein the body (4) has a recess (15) in the form of a circular cylinder, a first opening (11), and a second opening (12), wherein the first opening (11) and the second opening (12) each form an access to the recess (15), **characterised in that**
- the first opening (11) and the second opening (12) are in a plane (18), wherein the plane (18) is arranged perpendicular to the longitudinal axis (21) of the recess (15), and
- the first opening (11) and the second opening (12) are orthogonal to each other in the plane (18).

2. The damping device according to claim 1,
**characterised in that**
- the first opening (11) and the second opening (12) each are formed as a bore-like opening.

3. The damping device according to any one of the preceding claims,
**characterised in that**
- the recess (15) is enclosed on all sides by the body (4).

4. The damping device according to any one of the preceding claims,
**characterised in that**
- the recess (15) is accessible for optical radiation through the first opening (11) and the second opening (12).

5. The damping device according to any one of the preceding claims,
**characterised in that**
- the first opening (11) is an inlet opening for optical radiation, and the second opening (12) is an outlet opening for optical radiation.

6. The damping device according to any one of the preceding claims,
**characterised in that**
- the body (4) has a can-like part (7) and a lid (10), wherein the lid (10) seals the can-like part (7).

7. The damping device according to claim 6,
**characterised in that**
- the lid (10) is releasably connected to the can-like part (7).

8. The damping device according to claim 6 or 7,
**characterised in that**
- the first opening (11) and the second opening (12) are arranged in the can-like part (7).

9. The damping device according to any one of the preceding claims,
**characterised in that**
- the recess (15) is delimited by a bottom surface (25), a lateral surface (27) and a top surface (29).

10. The damping device according to claim 9 and claim 6,
**characterised in that**
- the bottom surface (25) and the lateral surface (27) are associated with the can-like part (7), and the top surface (29) is associated with the lid (10).

11. The damping device according to claim 9 or 10,
**characterised in that**
- the lateral surface (27) has a reflective coating or is anodised.

12. The damping device according to any one of claims 9 to 11, **characterised in that**
- the optical damping of the damping device (1) substantially corresponds to the ratio of the free cross-sectional area of the second opening (12) and the lateral surface (27).

13. A method for damping optical radiation using a damping device (1) according to claim 1,
wherein
in the method
- optical radiation (303) is introduced through the first opening (11) into the recess (15),
- the radiation is frequently reflected (306) at a surface (27) delimiting the recess (15), and
- only the portion of the radiation reflected onto the second opening (12) is discharged from the body (4) as outgoing radiation (309).

## Revendications

1. Dispositif d'atténuation (1) pour atténuer un rayonnement optique, comprenant un corps (4) en matériau sensiblement imperméable au rayonnement, dans lequel le corps (4) présente un évidement (15) en forme de cylindre circulaire, une première ouverture (11) et une deuxième ouverture (12), dans lequel la première ouverture (11) et la deuxième ouverture (12) forment chacune un accès à l'évidement (15), **caractérisé en ce que**
- la première ouverture (11) et la deuxième ouverture (12) se trouvent dans un plan (18), dans lequel le plan (18) est agencé perpendiculairement à l'axe longitudinal (21) de l'évidement (15), et
- la première ouverture (11) et la deuxième ouverture (12) sont perpendiculaires l'une à l'autre dans le plan (18).

2. Dispositif d'atténuation selon la revendication 1,
**caractérisé en ce que**
- la première ouverture (11) et la deuxième ouverture (12) sont chacune réalisées sous la forme d'une ouverture en forme d'alésage.

3. Dispositif d'atténuation selon l'une quelconque des revendications précédentes,
**caractérisé en ce que**
- l'évidement (15) est entouré de tous côtés par le corps (4).

4. Dispositif d'atténuation selon l'une quelconque des revendications précédentes,
**caractérisé en ce que**
- l'évidement (15) est accessible au rayonnement optique à travers la première ouverture (11) et la deuxième ouverture (12).

5. Dispositif d'atténuation selon l'une quelconque des revendications précédentes,
**caractérisé en ce que**
- la première ouverture (11) est une ouverture d'entrée pour un rayonnement optique et la deuxième ouverture (12) est une ouverture de sortie pour un rayonnement optique.

6. Dispositif d'atténuation selon l'une quelconque des revendications précédentes,
**caractérisé en ce que**
- le corps (4) comporte une partie en forme de boîte (7) et un couvercle (10), dans lequel le couvercle (10) ferme la partie en forme de boîte (7).

7. Dispositif d'atténuation selon la revendication 6,
**caractérisé en ce que**
- le couvercle (10) est relié de manière amovible à la partie en forme de boîte (7).

8. Dispositif d'atténuation selon la revendication 6 ou 7,
**caractérisé en ce que**
- la première ouverture (11) et la deuxième ouverture (12) sont agencées dans la partie en forme de boîte (7).

9. Dispositif d'atténuation selon l'une quelconque des revendications précédentes,
**caractérisé en ce que**
- l'évidement (15) est délimité par une surface de fond (25), une surface latérale (27) et une surface de recouvrement (29).

10. Dispositif d'atténuation selon la revendication 9 et la revendication 6,
**caractérisé en ce que**
- la surface de base (25) et la surface latérale (27) appartiennent à la partie en forme de boîte (7) et la surface de recouvrement (29) appartient au couvercle (10).

11. Dispositif d'atténuation selon la revendication 9 ou 10,
**caractérisé en ce que**
- la surface latérale (27) est revêtue d'un revêtement réfléchissant ou anodisée.

12. Dispositif d'atténuation selon l'une quelconque des revendications 9 à 11,
**caractérisé en ce que**
- l'atténuation optique du dispositif d'atténuation (1) correspond essentiellement au rapport entre la section libre de la deuxième ouverture (12) et la surface latérale (27).

13. Procédé d'atténuation d'un rayonnement optique au moyen d'un dispositif d'atténuation (1) selon la revendication 1,
dans lequel
dans le procédé
- un rayonnement optique (303) est introduit par la première ouverture (11) dans l'évidement (15),
- le rayonnement est réfléchi (306) plusieurs fois sur une surface (27) délimitant l'évidement (15), et
- seule la partie du rayonnement qui est réfléchie sur la deuxième ouverture (12) est évacuée du corps (4) sous forme de rayonnement sortant (309).
